Europäisches Patentamt

European Patent Office

Office européen des brevets

(19)

(11) Publication number: **0 126 607**
A2

(12) # EUROPEAN PATENT APPLICATION

(21) Application number: **84303259.0**

(22) Date of filing: **15.05.84**

(51) Int. Cl.³: **F 16 C 35/06,** F 16 C 19/38, F 16 C 25/00, B 60 B 35/18

(30) Priority: **19.05.83 US 496309**

(71) Applicant: **FEDERAL-MOGUL CORPORATION, Legal Department P.O. Box 1966, Detroit, MI 48235 (US)**

(43) Date of publication of application: **28.11.84 Bulletin 84/48**

(72) Inventor: **Ladin, Eli M., 1608 Morton Avenue, Ann Arbor Michigan (US)**

(84) Designated Contracting States: **AT BE CH DE FR GB IT LI LU NL SE**

(74) Representative: **Wisher, Michael Frederick et al, Urquhart-Dykes & Lord Archdeaconry House Gravel Walk, Peterborough, Cambs. PE1 1YU (GB)**

(54) Cartridge bearing apparatus and method.

(57) A cartridge bearing unit particularly useful for heavy duty motor vehicle wheel bearing applications features a pair of bearings being axially separated by an inner spacer and an outer housing. The housing has an adjustable axial length which provides for accurate adjustment of bearing clearance. By adjusting and fixing the housing length, bearing clearance is established eliminating the need to adjust clearances upon installation. The entire bearing unit is self-contained including a lubricant seal thereby simplifying bearing servicing.

EP 0 126 607 A2

ACTORUM AG

- 1 -

## CARTRIDGE BEARING APPARATUS AND METHOD

### BACKGROUND OF THE INVENTION

Bearings of the type employing rotating elements such as balls or rollers are subject to a number of factors which affect their durability and longevity. Of particular importance in this regard is the retention of lubricating fluids and providing proper bearing preload or end play. These problems become particularly acute with regard to wheel bearings for motor vehicles such as heavy duty trucks which employ a separated pair of tapered roller bearings for rotatably supporting each wheel. In this application, lubricant seals are often damaged in the process of installation and service of such wheel bearings and certain associated wheel structures. Seal damage leads to loss of lubricant and subsequent premature bearing failure. Bearing preload or end play is another factor having a direct relation to bearing and seal performance. With regard to heavy duty trucks and other motor vehcles, bearing clearances are established typically by adjusting an axle end nut after the bearings are installed while rotating the entire wheel assembly to seat the bearings; frequently, service personnel lack the necessary resources to perform this adjustment accurately. Moreover, this type of bearing clearance adjustment has an inherent accuracy limitation imposed since the castellated axle nuts typically employed must be moved to specific angular locations in order to permit the insertion of a locking pin. Replacement of bearings is a difficult, time consuming task which requires disassembly of bearing components and removal of the associated seal thereby exposing them to contamination and damage. Further, such task must normally be performed at a maintenance facility. In addition to the above concerns, if bearing replacement could be simplified, accomplished more rapidly, and performed at the site of a breakdown, considerable savings in terms of vehicle down time could be achieved.

Attempts have been made in the past to address some of the above shortcomings by providing a cartridge or unitary type bearing assembly employing bearing clearance adjusting means as shown for example in U.S. patents: 801,835; 1,186,252; 1,242,153; 3,156,506; 3,336,998; 3,997,741; 4,089,570; 4,240,681; 4,329,000; 4,333,695; 4,248,487; and 4,273,391. One problem with prior cartridge bearing designs was that the preload or end play adjustment was typically established by providing precisely dimensioned matched components. Typically, the production of these units is complex and time consuming and in either event results in high costs. We have identified a requirement for a cartridge type bearing assembly which not only resolves the shortcoming of current wheel bearing assemblies but further overcomes the disadvantages of prior cartridge type bearing assemblies. The present invention is defined in the accompanyir claims and aims to provide an improved bearing assembly and/or

0126607

such an assembly offering one or more improvements in relation to one or more of the foregoing requirements.

There is described below an improved bearing assembly, and particularly a cartridge type wheel bearing unit for motor vehicles such as heavy duty trucks. The bearing assembly employs axially separated bearing assemblies typically separated by an inner spacer which abuts the bearing inner races and a housing which supports the bearing bearing outer races. In some wheel bearing applications, a positive clearance referred to as end play is desired between the bearing rolling elements and the associated races whereas other applications call for negative bearing clearances or bearing preload. Hereinafter, preload and end play adjustments will be referred to as bearing clearance. The desired bearing clearance is achieved for this novel bearing assembly by providing the housing with a selectively adjustable axial length whereby one bearing outer race can be moved axially with respect to the other. Bearing clearance is established by selecting and fixing the axial length of the housing. Additionally, the cartridge bearing assembly is constructed such that the lubricant seal is protected thus obviating seal damage problems. The described / wheel bearing assembly, constructed in accordance with the teachings of this invention, provides a cartridge bearing assembly which may be quickly removed and replaced having a preset bearing clearance adjustment, an integral lubricant seal, and which being in a cartridge form is protected from contamination. Moreover, since bearing clearance adjustment is achieved in the factory using specialized equipment and is infinitely variable, it may be adjusted more accurately than when installed on the vehicle in the field even by the most experienced mechanic.

## DESCRIPTION OF THE DRAWINGS

Figure 1 is a pictorial view of a cartridge wheel bearing assembly according to the present invention.

Figure 2 is a sectional view to an enlarged scale of the bearing shown in Figure 1 showing the internal components of a cartridge bearing assembly according to this invention and further showing the environment wherein such a bearing assembly could be advantageously employed.

Figure 3 is an exploded sectional view of the cartridge bearing assembly of Figures 1 and 2.

Figure 4 is a fragmentary cross-sectional view of a second embodiment of the invention showing a modified inboard bearing inner race and spindle.

Figure 5 is a fragmentary cross-sectional view of a third embodiment of the invention showing a modified system for retaining the bearing assembly within the wheel.

Figure 6 is a sectional view to an enlarged scale of a fourth embodiment of the invention showing an alternative bearing configuration.

## DETAILED DESCRIPTION OF THE INVENTION

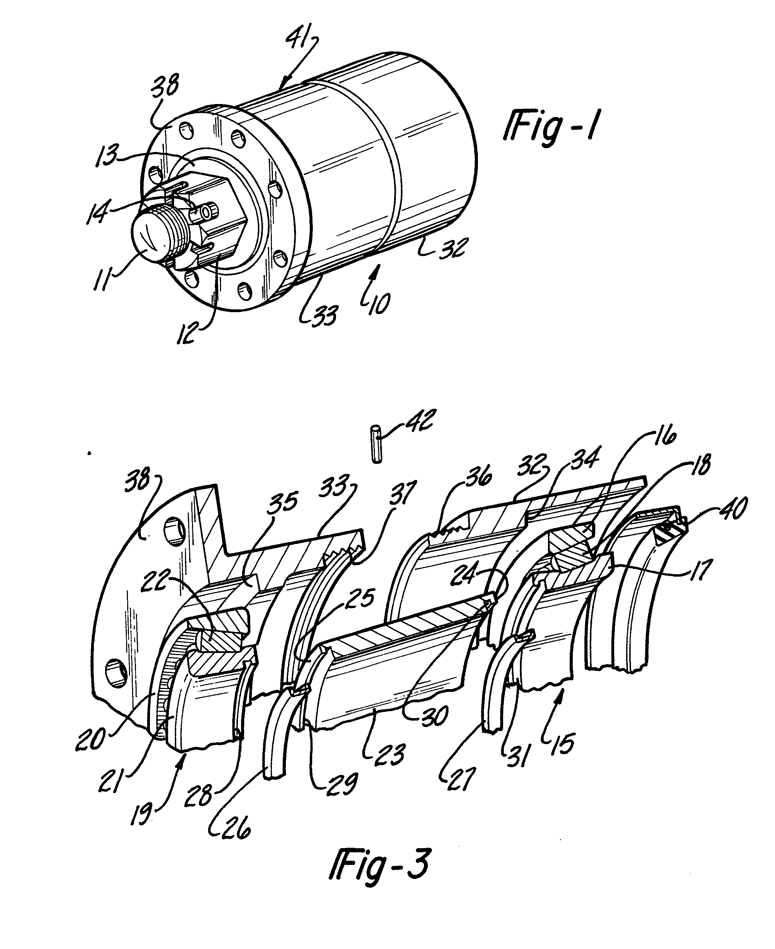

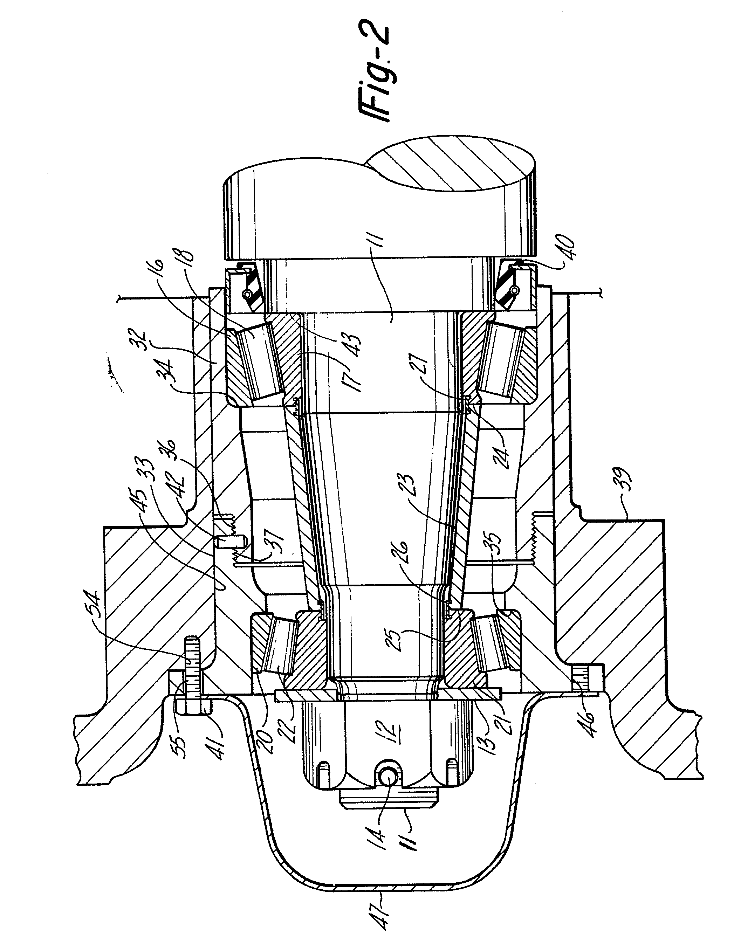

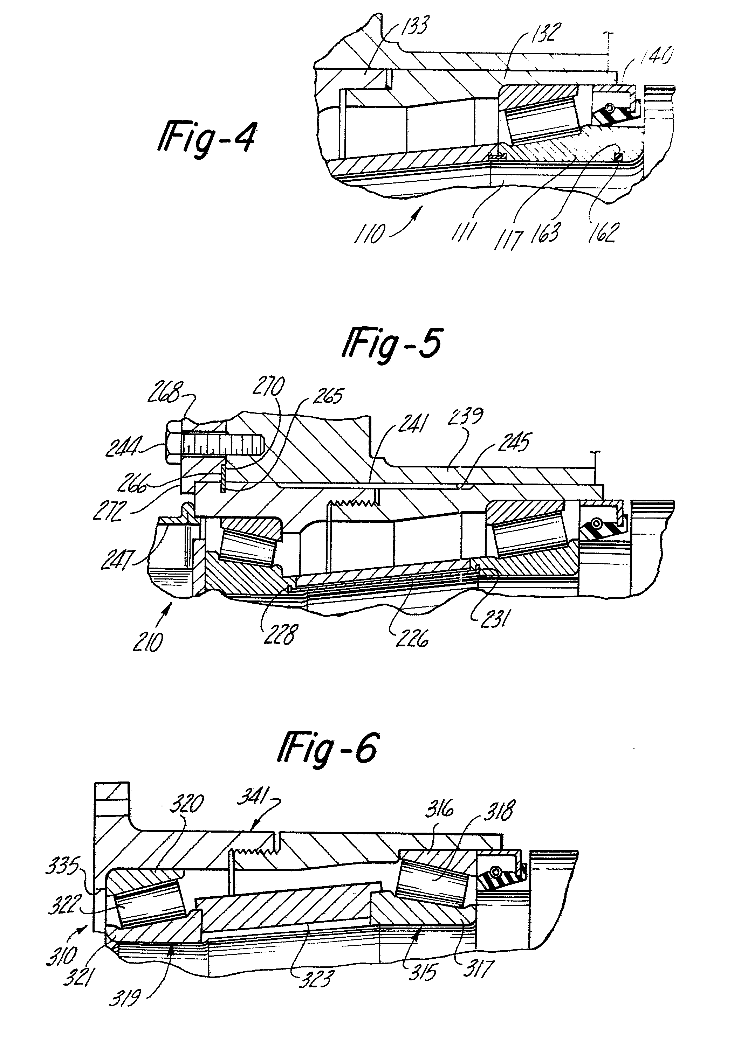

A first embodiment of a cartridge type bearing assembly according to ths invention is generally designated by reference character 10 and is shown by Figures 1, 2 and 3 mounted on a threaded spindle 11 and retained by axle nut 12 and washer 13. Axle nut 12 is typically locked in position by a cotter pin or roll pin 14, or a jam nut arrangement could be used. Nut 12 conventionally can be of a castellated type having a plurality of slots or notches into which pin 14 can be located. The internal components of cartridge bearing assembly 10 are shown in detail by Figures 2 and 3. Inboard bearing assembly 15 is a tapered roller bearing having outer race 16, inner race 17 and rollers 18 circumferentially separated by a cage (not shown). Outboard bearing assembly 19 is also of the tapered roller configuration and includes outer race 20, inner race 21 and rollers 22 circumferentially separated by a cage (not shown). The bearing system shown is often described as an externally converging type wherein lines drawn normal to the longitudinal axes of the rollers converge outside of the bearing assembly.

Cartridge bearing assembly 10 includes inner spacer 23 which is an annular tube member having an internal bore sufficient to overfit spindle 11 and further having end faces 24 and 25 which abut inboard bearing inner race 17 and outboard bearing inner race 21, respectively. Inner races 17 and 21 have internal annular bores which are supported with a slip fit on annular land portions of spindle 11. Inner races 17 and 21 are axially held assembled to spacer 23 by retention clips 26 and 27. Retention clips 26 and 27 are annular U-sectional split rings being radially compressed and then expanded into cooperating annular grooves 28 and 29 (connecting inner race 19 to spacer 23), 30 and 31 (connecting spacer 23 to inner race 17), thereby retaining the associated parts.

Cartridge bearing assembly 10 includes housing 41 which is separated into first section 32 and second section 33. Housing first section 32 engages inboard bearing outer race 16 and includes shoulder 34; similarly housing second section 33 engages outboard bearing outer race 20 and includes shoulder 35. In this first embodiment of the invention housing sections 32 and 33 are interconnected by mating threaded portions 36 and 37 whereby they can be moved axially toward and away from one another. Housing second section 33 further forms flange 38 which is employed to fasten cartridge bearing assembly 10 to an associated wheel structure 39. Lubricant seal 40 prevents oil or grease loss from the bearing assembly in a manner well known to the art.

An important feature of the subject invention is the provision for bearing clearance adjustment which is established by varying the length of housing 41 which results in changing the distance between shoulders 34 and 35 and hence between bearing outer races 16 and 20 thus changing bearing clearance. With reference to the illustrated first embodiment, this adjustment is accomplished by varying the extent of threaded engagement between housing portions 32 and 33. As is apparent from the illustrations, when inner races 17 and 21 are clamped axially to spacer 23, increasing the length of housing 41 results in decreasing bearing clearance and vice versa.

Bearing clearance calibration occurs at the factory according to the following procedure provided by way of illustration. Bearing assembly 10 is mounted into a fixture which applies a clamping force on the inner bearing races 17 and 21 and spacer 23 so that their positions will be as installed on the vehicle. Next, bearing inner races 17 and 21 are rotated with respect to outer races 16 and 20 ensuring that the rolling elements are properly seated. The housing length is then adjusted by rotating housing first section 32 with respect to second section 33 until the desired bearing clearance is established. Bearing clearance can be measured by a number of techniques for example (i) by measuring the rotational torque between threaded portions 36 and 37 of housing first and second portions 32 and 33 respectively, (ii) by measuring the relative rotational torque of the inner and outer races of the respective bearing assemblies 15 and 19 while clamped in the aforesaid fixture, or (iii) by direct measurement of bearing clearances. When the desired bearing clearance is established a hole is drilled through the threaded portion 37 of housing second section 33 and partially into the threaded portion 36 of first section 32 and pin 42 is driven into the hole preventing relative rotation of housing sections 32 and 33, thereby permanently fixing the bearing preload. Other means for fixing sections 32 and 33 could be employed such as welding, brazing, adhesive bonding and the like.

Retention clips 26 and 27 prevent the bearing assemblies 15 and 19 from being removed from the cartridge bearing assembly 10 and further retains spacer 23 in axial alignment while the unit is handled and transported.

Mounting of bearing assembly 10 onto spindle 11 is shown by Figure 2 wherein it is shown that inboard bearing inner race 17 abuts spindle shoulder 43 such that when axle nut 12 is tightened inner race 21, spacer 23 and inner race 17 are clamped against spindle shoulder 43 thereby retaining the cartridge bearing assembly 10 on spindle 11. Unlike conventional wheel bearing assemblies, the torque on axle nut 12 does not control bearing clearance. A cartridge bearing assembly consistent with the design described could also be employed for a live axle in which spindle 11 is replaced with an axle tube having a live axle passing therethrough.

Cartridge bearing assembly 10 is mounted to the wheel structure 39 as shown in Figure 2 by bolts 44 passing through holes 53 in outer sleeve flange 38 threadably engaging threaded bores 54. Wheel structure 39 forms a bore 45 adapted to snugly receive outer sleeve 41. In applications requiring a press fit between outer sleeve 41 and wheel structure bore 45, sleeve flange 38 may be provided with a plurality of threaded holes 46 radially spaced about flange 38 which are not aligned with threaded bores 54 in wheel structure 39. By threading a bolt into hole 46, it contacts wheel 39 and the cartridge bearing assembly 10 is withdrawn from the wheel. Installation of bearing assembly 10 into wheel 39 simply involves tightening bolts 44 which draws the bearing into the position shown within the wheel. Bolts 44 are then withdrawn to permit installation of axle nut 12 and asociated components. Bolts 44 are reinstalled and act to affix hub cap 47 necessary to retain lubricant and prevent bearing contamination.

A second embodiment of a cartridge bearing assembly 210 according to this invention is depicted by Figure 4 which is a fragmentary cross-sectional view showing the inward extension of inboard bearing inner race 117 such that lubricant seal 140 mates with the race as opposed to the spindle 111 as shown by Figure 2. This design provides the advantage that lubricant seal 140 is protected from damage from impact or misalignment during assembly. Spindle 111 is modified from that of spindle 11 to accommodate the noted seal configuration. This embodiment further features telescoping housing portions 132 and 133 which are not threaded. Calibration of this unit occurs by moving one sleeve portion longitudinally with respect to the other. In this case, bearing clearances or preload may be set by relative rotational torque of the bearing assemblies or by direct measurement as described earlier. Fixing of portion 132 to 133 is achieved by tack welding, brazing, bonding or any other suitable means. When oil is used for lubrication it is desireable to provide O-ring 162 to ensure oil retention. Groove 163 provides a seat for O-ring 162. The remaining structure of this second embodiment remains identical with that described in connection with the first embodiment. When necessary the cartridge outer surface may further be provided with an O-ring or gasket to prevent oil leakage between the cartridge and hub.

A third embodiment of this invention is shown by Figure 5. Cartridge 210 differs principally from the first embodiment in that an alternate mounting system, hub cap and retention clip are employed. Cartridge 210 has a cylindrical outer surface with peripheral groove 265 formed in housing 241. Snap ring 266 is installed in groove 265 and extends radially outwardly beyond housing 241. Mounting ring 268 which is retained by bolts 244 includes groove 270 which conforms to snap ring 266 and inward flange 272 acting to prevent outward excursion of cartridge 210 relative to wheel structure 239. Inward excursion is controlled by the contact between snap ring 266 and wheel structure 239. Snap ring 266 may be factory installed such that the unit is simply slid into bore 245 whereupon mounting ring 268 is installed. If desired any one of numerous antirotation means well known to the prior art could be employed to prevent relative rotation between cartridge 210 and wheel structure 239.

Another feature depicted by the third embodiment is alternate retention clip 226 which cooperates with grooves to retain the associated components. Clip 226 is a relatively narrow member several of which may be employed at various radial positions. Further, Figure 5 shows alternate hub cap 247 which is press fit into engagement with the internal diameter formed by housing 241.

A fourth embodiment of a cartridge bearing assembly 310 according to this invention is illustrated by Figure 6. This embodiment employs an alternate bearing configuration and spacer design. The individual bearing assemblies 315 and 319 are employed such that rollers 318 and 322 therein are inclined opposite that shown for the previous embodiments such that lines drawn normal to the longitudinal axes of the rollers diverge externally. Increasing the length of housing 341 produces an effect on bearing clearance opposite that for the previous embodiments, resulting in increased bearing clearance whereas a decrease in clearance would occur with bearing constructed according to the other embodiments. On the other hand, decreasing the length of housing 341 would cause a decrease in clearance while an increase in clearance would result for the other embodiments.

The fourth embodiment further features an alternate spacer 323 design which by interlocking with inner races 317 and 321 does away with the necessity for retention clips. As is evident from Figure 6, spacer 323 will remain in radial position despite axial clearance between it and inner races 317 and 321.

Each of the described embodiments could be provided with a temporary protective liner (not shown) which would fit inside the bearing assembly contacting the inner races. The liner would preferably feature end flanges acting to prevent contamination from entering the bearing through the gap existing between the inner and outer bearing races prior to the installation.

While preferred embodiments of the invention have been described herein, it will be appreciated that various modifications and changes may be made without departing from

0126607

- 13 -

the sprit and scope of the appended claims.

The following features of the invention may be made the subject of additional claims to be filed at a later date during the prosecution of this application:

11. The bearing assembly according to claim 2 wherein said means for fixing said housing axial length comprises a pin tightly fitted within an inwardly directed bore formed by said housing portions.

12. The bearing assembly according to claim 2 wherein said housing comprises a first and second portion, said first housing portion engaging said first bearing outer race and having a reduced diameter section and said second housing portion engaging said second bearing outer race and having a section receiving said first housing portion reduced diameter section such that said housing portions axially telescope together causing adjustment of said bearing assembly clearance.

13. The bearing assembly according to claim 2 further comprising means for mounting said bearing assembly to said wheel comprises said housing having an external cylindrical surface closely received by a mating internal cylindrical surface formed by said wheel.

14. The bearing assembly according to claim 7 wherein said means further comprises an external radially projecting flange formed by said housing having means for fastening said housing to said wheel.

15. The bearing assembly according to claim 7 wherein said means for mounting said bearing assembly to said wheel comprises:

a peripheral groove formed by the external surface of said housing,

a snap ring fitted within said groove and extending radially beyond said external surface of said housing, and

a mounting ring removably affixed to said wheel having a surface cooperating with said snap ring.

16. The bearing assembly according to claim 2 further comprising means for mounting said bearing to said axle member comprises a shoulder formed by said axle which acts with a nut on a threaded end of said axle to cause clamping of said first and second bearing inner races and said spacer.

17. The bearing assembly according to claim 2 further comprising means for retaining said bearing inner races in contact with said spacer.

18. The bearing assembly according to claim 11 wherein said means comprises:

a first and second locking ring having radially outwardly projecting axially spaced flanges, said first locking ring being received by a groove formed by said first bearing inner race and an adjacent groove formed by said spacer and said second locking ring being received by a groove formed by said inner race and an adjacent groove formed by said spacer.

19. The bearing assembly according to claim 11 wherein said means comprises axially extending peripheral flanges formed at each axial end of said spacer said flanges engaging said bearing inner races.

20. The bearing assembly according to claim 2 further comprising lubricant seal means fixed to said housing and further slidably contacting said second bearing inner race.

21. A cartridge type wheel bearing assembly for a motor vehicle centered on an axle and rotatably supporting a wheel comprising:

a first tapered roller bearing having an inner race and an outer race,

a second tapered roller bearing having an inner race and an outer race,

a spacer having an internal bore cooperating with said axle member and having end surfaces axially separating said first bearing inner race from said second bearing inner race on said axle,

a housing engaging said first bearing outer race and said second bearing outer race and having an adjustable axial length such that the axial spacing between said outer races is adjustable thereby adjusting the bearing clearance of said bearing assembly,

means for fixing said outer sleeve axial length thereby fixing said bearing assembly clearance, and

means for mounting said bearing assembly to said axle.

0126607

22.   The wheel bearing according to claim 15 wherein said first and second tapered roller bearing form the externally diverging configuration whereby a decrease in said axial spacing between said outer races increases bearing assembly clearance whereas an increase in said axial spacing between said outer races decreases bearing assembly clearance.

23.   The wheel bearing according to claim 15 wherein said first and second roller bearings form the externally converging configuration whereby a decrease in said axial spacing between said outer races decreases bearing clearance whereas an increase in said axial spacing between said outer races increases bearing clearance.

24.  A cartridge bearing assembly adapted to be secured to an axle for rotatably supporting a wheel comprising:

a first bearing having an inner race and an outer race and further having rolling elements interposed therebetween,

a second bearing having an inner race and an outer race and further having rolling elements interposed therebetween,

a spacer member having an internal bore cooperating with said axle and axially separating said first bearing inner race from said second bearing inner race on said axle,

a housing member axially separating said first bearing outer race from said second bearing outer race, and

a lubricant seal radially interposed between said housing and one of said first or second bearing inner races.

CLAIMS:

1.    A cartridge bearing assembly adapted to be secured to an axle for rotatably supporting a wheel comprising:

a first bearing having an inner race, an outer race and rolling elements interposed therebetween,

a second bearing having an inner race, an outer race and rolling elements interposed therebetween,

a spacer member having first locating surfaces axially separating one of said first bearing races from one of said second bearing races,

a housing member having second locating surfaces axially separating the other of said first bearing races from the other of said second bearing races and having an adjustable axial length such that the axial spacing of said other races is adjustable, thereby adjusting the bearing clearance of each of said first and second bearings, and means for fixing said bearing assembly clearance once adjusted.

2. A cartridge bearing assembly adapted to be secured to an axle for rotatably supporting a wheel comprising:

a first bearing having an inner race and an outer race and further having rolling elements interposed therebetween,

a second bearing having an inner race and an outer race and further having rolling elements interposed therebetween,

a spacer member having an internal bore cooperating with said axle and having first locating surfaces axially separating said first bearing inner race from said second bearing inner race on said axle,

a housing member having second locating surfaces axially separating said first bearing outer race from said second bearing outer race having an adjustable axial length such that the axial spacing of said outer races is adjustable, thereby adjusting the bearing clearance of said bearing assembly, and

means for fixing said housing axial length thereby fixing said bearing assembly clearance.

3. The cartridge bearing assembly of claim 2 wherein said housing member comprises two portions adapted to be moved axially relative to each other whereby said adjustable axial length can be selectively determined.

4. The cartridge bearing assembly of claim 3 wherein said two housing portions are threadably engaged such that said adjustable axial length can be varied by relative rotation between said portions.

5. A method for assembling a cartridge type bearing assembly having two separated bearings and simultaneously adjusting and fixing the bearing clearance thereof comprising the steps of:

providing a bearing unit having an adjustable member having a selectively increased or decreased length which varies the axial spacing of the races of said separated bearing thereby adjusting the bearing clearance of said bearing assembly,

adjusting the axial spacing of said bearing races by adjusting said length of said adjustable member, and

fixing said axial spacing when a predetermined bearing clearance value is achieved.

6. The method according to claim 5 wherein said bearing has a housing forming two portions threaded together thereby providing said axial length adjustment wherein said fixing step comprises:

welding said outer sleeve portions together.

7. The method according to claim 5 wherein said bearing has a housing forming two portions threaded together thereby providing said axial length adjustment wherein said fixing comprises the steps of:

boring a hole directed radially inwardly into both of said housing portions,

0126607

- 23 -

providing a pin slightly greater in diameter than said bore, and

driving said pin into said bore.

8. The method according to claim 5 wherein said bearing housing has two portions telescoping together thereby providing said axial length adjustment wherein said fixing comprises the step of:

welding said outer sleeve portions together.

9. A method of installing a cartridge wheel bearing assembly into a wheel forming an internal bore for receiving said cartridge with an interference fit, wherein said cartridge forms a radially outwardly extending flange having a plurality of radially spaced holes axially aligned with threaded holes in said wheel comprising the steps of:

placing said cartridge in axial alignment with said wheel bore such that said flange holes are aligned with said threaded holes,

providing a plurality of bolts for threadingly engaging said threaded holes, placing said bolts through said flange holes and threading said bolts into said threaded holes, and

tightening said bolts whereby said bolts cause said cartridge to be moved into installed position within said wheel.

10. A method of removing a cartridge wheel bearing assembly from a wheel wherein said cartridge and said wheel are press fit together, said cartridge forming a radially extending flange forming a number of threaded holes, said threaded holes aligned with surfaces transverse to said holes formed by said wheel comprising the steps of:

providing a plurality of threaded bolts,

threading said bolts into said threaded flange holes, whereby when said bolts contact said wheel perpendicular surface said cartridge is withdrawn from said wheel.

0126607

1/3

Fig-1

Fig-3

Fig-2

**Fig-4**

110 111 117 163 162
133 132 140

**Fig-5**

268 270 265 241 239 245
244
266
272
247
210 228 226 231

**Fig-6**

320 341 316 318
335
322
310
321
319 323 315 317